Europäisches Patentamt

European Patent Office

Office européen des brevets

(11) Numéro de publication: **0 295 215 B1**

(12) **FASCICULE DE BREVET EUROPEEN**

(45) Date de publication du fascicule du brevet:
**31.10.90**

(21) Numéro de dépôt: **88810375.1**

(22) Date de dépôt: **07.06.88**

(51) Int. Cl.⁵: **B25J 9/02, B25J 18/02**

(54) Robot cartésien.

(30) Priorité: **11.06.87  FR 8708169**

(43) Date de publication de la demande:
**14.12.88 Bulletin 88/50**

(45) Mention de la délivrance du brevet:
**31.10.90 Bulletin 90/44**

(84) Etats contractants désignés:
**CH DE GB IT LI SE**

(56) Documents cités:
**DE-U- 8 526 088**
**DE-U- 8 601 444**
**US-A- 3 709 379**

(73) Titulaire: **SCHUNK HORMEC AUTOMATION AG,
Weyermattstrasse 4, CH-2560 Nidau(CH)**

(72) Inventeur: **Rochat, Daniel, Chemin de La Plage 6c,
CH-2072 Saint-Blaise(CH)**
Inventeur: **Urwyler, Jean-François, Rue du Locle 3a,
CH-2300 La Chaux-de-Fonds(CH)**
Inventeur: **Sappe, Oreste, Rue des Parcs 9,
CH-2000 Neuchâtel(CH)**

(74) Mandataire: **Caron, Gérard et al, ICB Ingénieurs
Conseils en Brevets SA Passage Max. Meuron 6,
CH-2001 Neuchâtel(CH)**

ACTORUM AG

## Description

La présente invention se rapporte aux robots cartésiens, c'est-à-dire comportant des moyens permettant de déplacer une tête de travail selon trois axes orthogonaux.

A ce jour, de nombreux types de robots cartésiens ont été développés. Les plus connus comportent une table de travail de forme rectangulaire et munie d'un pilier à chacun de ses angles s'étendant vers le haut à partir de la surface supérieure de cette table. Les piliers portent un ensemble de quatre rails. Deux d'entre eux sont parallèles et relient chacun deux piliers pour soutenir et guider un portique muni d'un autre rail horizontal s'étendant transversalement. Ce dernier assure le guidage d'un chariot, portant lui-même un rail mobile verticalement, sur lequel un outil peut être fixé. Cette structure présente une grande stabilité dimensionnelle, mais est très encombrante.

Il existe aussi des robots comportant trois rails de guidage, agencés orthogonalement. Le premier rail est solidaire du support formant la table de travail et définit un premier axe horizontal X. Un premier patin, monté coulissant sur ce rail, porte un deuxième patin dans lequel un deuxième rail intermédiaire est monté coulissant. Ce deuxième rail s'étend verticalement et définit un axe vertical Z. L'extrémité du deuxième rail porte un troisième patin qui coopère avec un troisième rail, horizontal, définissant un deuxième axe horizontal Y, perpendiculaire aux axes X et Z. L'extrémité du troisième rail porte la tête destinée à être munie d'un outil.

Le robot est bien entendu équipé de moyens d'entraînement pour assurer le déplacement des patins et des rails.

On comprendra aisément que le rail solidaire du support doit être aussi rigide que possible, pour assurer la stabilité de l'ensemble, et que le rail portant la tête doit être aussi léger que possible, pour éviter une déformation du rail intermédiaire et garantir la mobilité de l'ensemble.

La section du rail intermédiaire (d'axe Z) est comprise entre celle du rail solidaire du support (d'axe X) et celle du rail solidaire de la tête (d'axe Y).

En choisissant la configuration ci-dessus, c'est-à-dire: un rail d'axe X solidaire du support, un rail d'axe Z intermédiaire et un rail d'axe Y portant la tête, il est possible d'éviter au maximum le fléchissement des rails horizontaux.

En effet, le rail d'axe X étant fixé rigidement au support, il ne fléchit pratiquement pas. Le rail d'axe Z, qui est solidaire d'un chariot monté coulissant sur le rail d'axe X ne subit pas non plus de fléchissement par l'effet de son poids, puisqu'il s'étend verticalement. Le seul fléchissement qui ne peut être négligé se produit donc sur le rail d'axe Y, engendré par son propre poids, ainsi que ceux de la tête et de l'outil.

Ce type de robots présente toutefois un inconvénient majeur, à savoir que pour régler la position en hauteur de la tête, le rail d'axe Z doit descendre plus ou moins en-dessous du niveau de la table de travail, ce qui implique que le rail d'axe X doit se trouver au bord de celle-ci. Cette exigence en limite donc les possibilités d'implantation par rapport à la table de travail.

Le brevet US-A-3,709.379 décrit un robot cartésien avec un bras d'axe X monté coulissant sur la table et un bras d'axe Z destiné à porter un outil. Un tel robot permet d'éviter que le bras d'axe Z descende en-dessous de la table. Il en résulte malheureusement une plus forte tendance du fléchissement du bras d'axe Y, dès lors qu'il porte le bras d'axe Z et l'outil. Ce document a servi de base pour l'élaboation du préambule de la revendication 1.

Un but de la présente invention est de réaliser un robot pouvant être placé n'importe où sur une surface plane, et qui soit pratiquement exempt d'effets de fléchissement de ses rails de guidage.

Ce but est atteint grâce aux caractéristiques particulières que présente le robot tel que défini dans la partie caractérisante de la revendication 1.

Le document DE-U 8 601 444 publié après la date de priorité de la présente demande et n'illustrant donc pas l'état de la technique que décrit une poutre formée d'un profilé en aluminium portant sur chacune de ces faces des rails en acier. Le profilé et les rails sont rendus solidaires l'un de l'autre par extrudage. Pour guider et positionner une telle poutre, celle-ci est engagée dans une ouverture centrale que comporte un patin.

Cette solution présente deux inconvénients majeurs.

La réalisation de rails de ce type implique un engagement financier qui ne peut être envisagé que pour fabriquer de grandes séries de pièces, sinon la préparation des outillages et la mise au point des procédés d'extrudage augmenterait considérablement le coût du produit.

Par ailleurs, l'opération d'extrudage est susceptible de générer des tensions entre les rails en acier et le profilé en aluminium. C'est pourquoi les quatres faces du profilé portent des rails. Dans cette configuration, pour assurer un bon guidage, il faut que le patin entoure complément la poutre. Il n'est de la sorte pas possible de faire passer une pièce fixée sur le rail d'un côté à l'autre du patin.

Dans la configuration telle que revendiquée, le rail d'axe Z n'a plus besoin de descendre en-dessous du niveau de la table pour le réglage en hauteur de la tête, puisqu'il est solidaire de la tête de travail, et reste donc en permanence au-dessus de la table. Néanmoins, et bien que le rail intermédiaire n'est plus vertical, mais horizontal, le robot présente une précision et une rigidité suffisantes. Ceci provient de ce que ce rail intermédiaire est renforcé par un profilé de rigidification pouvant être réalisé en un matériau léger. Ce profilé permet ainsi au robot de travailler à grande vitesse, sans risque d'oscillation ou de fléchissement. On aurait pu craindre que l'association d'un rail en acier, combiné à un profilé en matériau léger génère une déformation de la poutre qu'ils forment ensemble.

Cette poutre comporte en effet deux parties présentant des coefficients de dilatation thermique différents, formant ainsi un bilame susceptible de fléchir lorsque la température varie. Or, il s'est avéré que ce fléchissement n'est pas rédhibitoire et cela pour les deux raisons suivantes.

Le fléchissement provoque une modification de la position de la tête essentiellement selon l'axe Z. Or, la précision selon cet axe revêt en général beaucoup moins d'importance que celle exigée selon les axes X et Y. C'est le cas notamment lorsque la tête est équipée d'un outil de préhension, qui peut saisir les objets à des hauteurs différentes selon l'axe Z, mais qui doit les positionner avec précision dans le plan X-Y.

On a par ailleurs constaté que dans la plupart des applications, la température ambiante est stable, suffisamment en tout cas pour ne pas affecter de manière sensible la précision du robot.

Il existe toutefois des cas exigeant une précision élevée selon l'axe Z. Il en est par exemple ainsi lorsque le robot doit glisser une pièce dans un trou horizontal pratiqué dans une autre pièce.

Dans ces cas-là, il est nécessaire que la stabilité thermique du robot soit élevée.

Ce but est atteint par les caractéristiques du robot définies dans l'une des revendications 3 à 5.

La stabilité thermique est obtenue en supprimant ou en empêchant le fléchissement de la poutre d'axe Y. Ce résultat peut être obtenu de différentes manières.

Selon la revendication 3, la forme du profilé est choisie de façon que sa fibre neutre soit confondue avec celle du rail. De la sorte, les forces engendrées respectivement par la dilatation du rail et du profilé sont coaxiales et ne provoquent aucun couple susceptible d'entraîner le fléchissement de l'ensemble de la poutre.

Selon la revendication 4, le profilé comporte un tube avec deux faces opposées. L'une des faces porte le rail d'axe Y, l'autre une bande de matériau destinée à engendrer un couple inverse et de même valeur que le couple engendré par la différence de dilatation du rail et du tube.

Selon la revendication 5, le profilé présente un coefficient de dilatation égal à celui du rail, du fait qu'il comporte, dans une proportion adéquate, des matériaux avec des coefficients de dilatation respectivement inférieur et supérieur à celui du matériau formant le rail.

L'invention sera mieux comprise à la lecture de la description qui va suivre faite en référence au dessin, et dans lequel:

- la figure 1 représente une vue schématique en perspective d'un robot selon un premier mode de réalisation de l'invention;
- la figure 2 est une vue de profil dans le plan X-Z d'une partie du robot de la figure 1, et plus particulièrement des patins coopérant avec les rails d'axes X et Y;
- la figure 3 est une vue schématique de profil, dans le plan X-Z, des moyens d'entraînement du chariot monté coulissant sur le rail d'axe X du robot de la figure 1;
- la figure 4 est une vue schématique de profil, dans un plan Y-Z, des moyens d'entraînement du rail d'axe Y du robot de la figure 1; et
- les figures 5 et 6 sont respectivement des vues de profil, dans le plan X-Z, des patins coopérant avec les rails d'axes X et Y, ainsi que d'un profilé de rigidification selon deux autres modes de réalisation de l'invention.

Sur ces figures, les mêmes éléments portent les mêmes références.

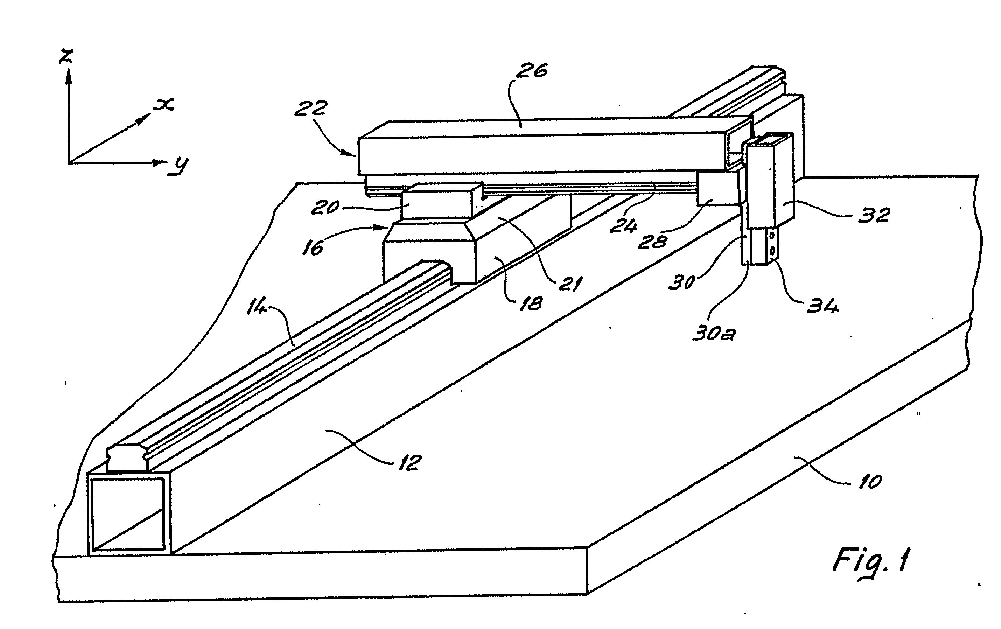

Le robot représenté aux figures 1 à 4 comporte une table 10 (figure 1) portant un socle 12 sur lequel est fixé un rail horizontal 14 définissant l'axe X du robot. Sur rail 14 un chariot 16 est monté coulissant au moyen d'un premier patin 18. Ce chariot 16 comporte en outre un deuxième patin 20 fixé au-dessus du premier patin 18, par l'intermédiaire d'une entretoise 21.

Une poutre 22 formée d'un rail 24 et d'un profilé de rigidification 26 est montée coulissante par son rail 24 sur le patin 20. Le rail 24 définit l'axe Y du robot qui est également horizontal et perpendiculaire à l'axe X.

L'extrémité 22a de la poutre 22, placée au-dessus de la table 10, porte un troisième patin 28. Ce dernier coopère avec un troisième rail 30 qui définit l'axe vertical Z du robot.

Ce rail 30 est avantageusement accouplé à un profilé de rigidification 32. Il porte à son extrémité inférieure 30a une tête de travail 34, destinée à recevoir un outil (non représenté au dessin).

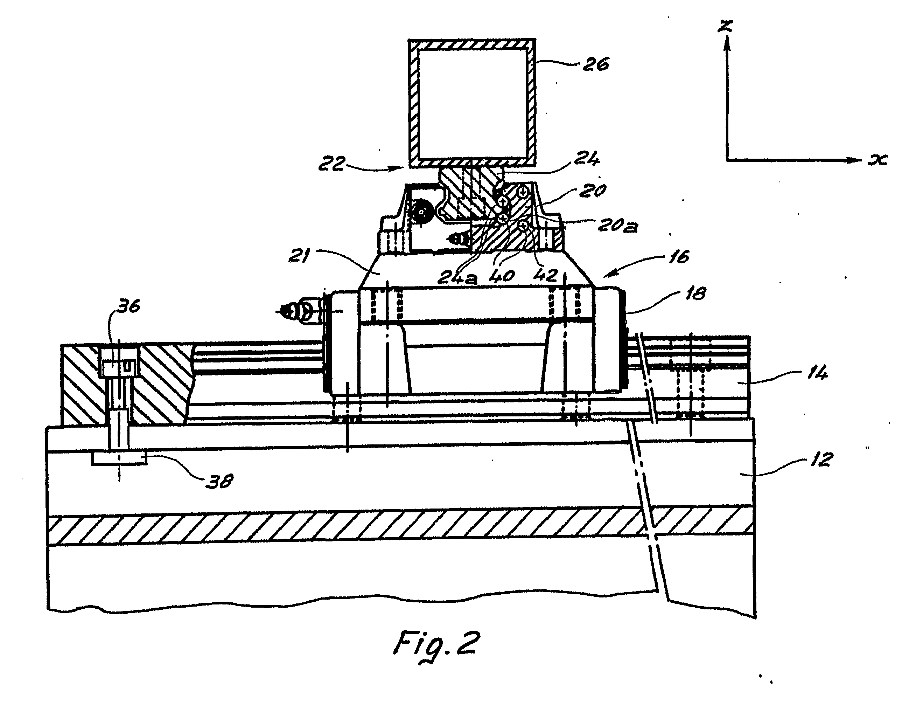

En se référant à la figure 2, on peut voir que le rail 14 est fixé au socle 12 par des ensembles composés d'une vis 36 d'un écrou 38, un seul de ces ensembles étant représenté. En outre, le rail 24 coulisse sur le patin 20 par l'intermédiaire de billes 40, réparties en quatre jeux coopérant chacun avec des surfaces de roulement 20a du patin 20 et 24a du rail 24. Le patin 20 comporte en outre des canaux de retour 42 permettant la circulation des billes 40.

Ce type de rail étant disponible dans le commerce sous la référence HSR25 TB (marque déposée LM GUIDE) de la maison THK à Tokyo, ne sera pas décrit plus précisément ci-après.

Le socle 12 est formé d'une poutre en profilé, vendu par la maison Micro-contrôle (France) sous la référence T 100. Le profilé a une section carrée et présentent des protubérances longitudinales en forme de T, parallèles les unes aux autres et définissant des rainures. Le rail 14 peut ainsi être facilement fixé au moyen des vis 36 et des écrous 38, comme cela a été expliqué ci-dessus. Le rail 14 forme avec le patin 18 un ensemble vendu sous la référence HSR 35 TB par la maison THK. Cet ensemble est similaire à celui qui vient d'être décrit, pour le rail 24 mais il est de plus grande dimension.

Le profilé 26 que comporte la poutre 22 est en forme de tube de section carrée, de 50 mm de côté, pour une épaisseur de paroi de 2 mm. Ce tube est en alliage d'aluminium-manganèse, vendu par la société Métallica (Suisse) sous l'appellation Al-Mg-Sil.

Le patin 28 et le rail 30 d'axe Z forment un ensemble similaire à ceux décrits ci-dessus, mais de plus petite dimension. L'ensemble choisi est vendu par la maison THK sous la référence RSR 12M. Le profilé de rigidification 32 est également réalisé au moyen d'un tube de section carrée en alliage d'aluminium-manganèse, mais de 30 mm de côté et de 2 mm de paroi.

Les rails 14, 24 et 30 sont en acier, leurs surfaces de roulement étant rectifiées.

Le robot que l'on vient de décrire permet un déplacement de la tête 34 selon les trois axes d'un espace cartésien.

Dans un prototype réalisé selon ce principe, la course est de 1200 mm selon l'axe X, de 300 mm selon l'axe Y et de 150 mm selon l'axe Z.

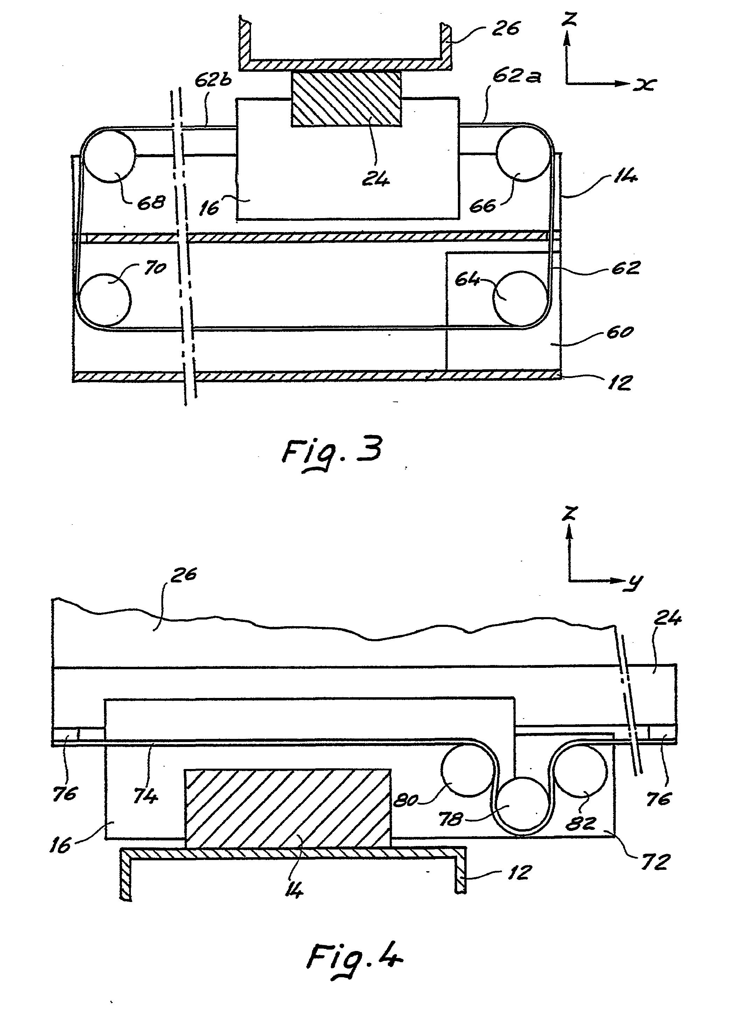

La figure 3 représente schématiquement dans un plan X-Z, une coupe du socle 12, le rail 14 fixé sur ce socle, le chariot 16 sur lequel le rail 24 est monté coulissant, ainsi que les moyens d'entraînement du chariot 16. Ces moyens comprennent un servo-moteur avec réducteur 60, et une courroie crantée 62 dont les deux extrémités 62a et 62b sont fixées au chariot 16, et qui passe sur une roue 64 entraînée par le moteur 60, et sur des roues 66, 68 et 70. Les roues 66 et 68 sont montées rotatives sur le rail 14, et la roue 70 tourne sur le socle 12. Ces roues 66, 68 et 70 assurent la tension de la courroie 62.

Il faut relever que seule la moitié de la courroie crantée 62 coopère avec la roue 64 du moteur 60, à savoir celle dont l'extrémité porte la référence 62a. L'autre moitié, c'est-à-dire celle dont l'extrémité porte la référence 62b, peut avantageusement être remplacée par un ruban en acier. Cette solution permet de réduire l'allongement de la courroie dû à la traction et d'augmenter ainsi la vitesse d'entraînement du chariot 16.

La figure 4, représente schématiquement dans un plan d'axe Y-Z, le socle 12, le rail 14, le chariot 16, le rail 24 ainsi que les moyens d'entraînement du rail 24. Ces derniers comprennent un servo-moteur 72 avec réducteur, une courroie crantée 74 fixée par ces extrémités 74a et 74b aux extrémités 24b et 24c du rail 24 par l'intermédiaire de talons 76, en porte-à-faux selon l'axe X, et des roues 78, 80 et 82. Le moteur 72 est monté sur la chariot 16 et entraîne la roue 78 qui coopère avec la courroie 74 pour l'entraîner. Les roues 80 et 82, respectivement montées rotatives sur le chariot 16 et sur le bâti du moteur 72, assurent la tension de la courroie 74.

Les moyens d'entraînement du rail 30 d'axe Z n'ont pas été représentés au dessin, car ils sont similaires à ceux destinés à l'entraînement du rail 24. On peut toutefois relever que le moteur qui entraîne le rail 30 peut avantageusement être fixé à l'intérieur du profilé 26.

La précision atteinte par le robot décrit ci-dessus est $\leq$ +/- 0,02 mm sur les axes X et Y. Elle est avant tout définie par la résistance aux couples de torsion des ensembles patin et rail dont les roulements sont précontraints pour garantir une rigidité maximum.

La précision sur l'axe Z n'est pas aussi bonne. Cela provient du fait que la tête de l'outil est en porte-à-faux, ce qui peut provoquer un fléchissement de la poutre 22. Ce fléchissement est considérablement réduit par la présence du profilé 26. Il est naturellement fonction de la charge transportée par l'outil de préhension. Il est de la sorte possible d'atteindre une précision $\leq$ +/- 0.05 mm selon cet axe Z pour une chage d'un kilogramme dans le cas du robot décrit.

Cette précision s'entend à température constante, ce qui est généralement le cas dans les ateliers de fabrication. Toutefois, lorsque la température varie dans de larges proportions, il peut être nécessaire de prendre certaines précautions. En effet, la poutre 22 telle qu'elle vient d'être décrite comporte, superposées, une pièce en alliage d'aluminium et une pièce en acier, dont les coefficients de dilatation thermique sont respectivement égaux à $24.10^{-6}$ et $12.10^{-6}$ par degré Celsius. Cette configuration peut engendrer un fléchissement par effet bilame. Pour éviter ce fléchissement, différentes solutions sont envisageables.

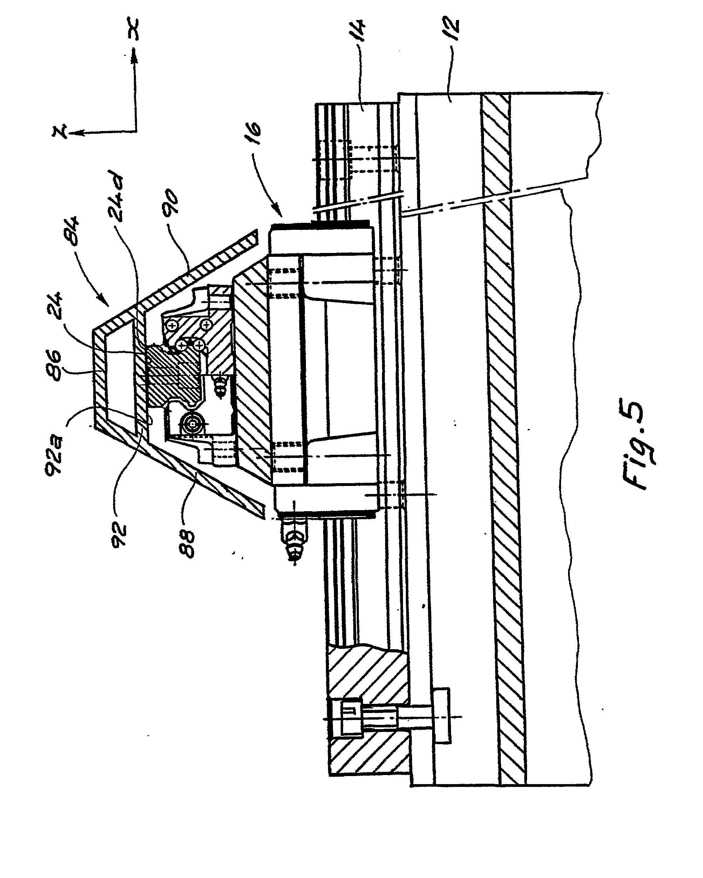

Une première d'entre elles est représentée à la figure 5, dans ce cas, la construction est identique à celle que l'on vient de décrire à ceci près que le profilé 26 est remplacé par un profilé 84 en forme de A, avec une branche supérieure 86, deux branches latérales 88 et 90, ainsi qu'une âme 92, dont la face inférieure 92a est en appui contre la face supérieure 24d du rail 24. La forme et les dimensions du profilé sont choisies de manière que sa fibre neutre soit confondue avec celle du rail 24. De la sorte, une dilatation ou une contraction du rail et du profilé ne provoque plus de fléchissement, puisque les forces engendrées par les différences de déformation sont coaxiales.

Le rail 24 et le profilé 84 sont fixés l'un à l'autre au moyen de vis non représentées au dessin.

Des profilés de formes différentes pourraient permettre d'atteindre le même but. C'est le cas par exemple d'un profilé en U retourné, le rail 24 étant fixé sur l'âme, à l'intérieur du U.

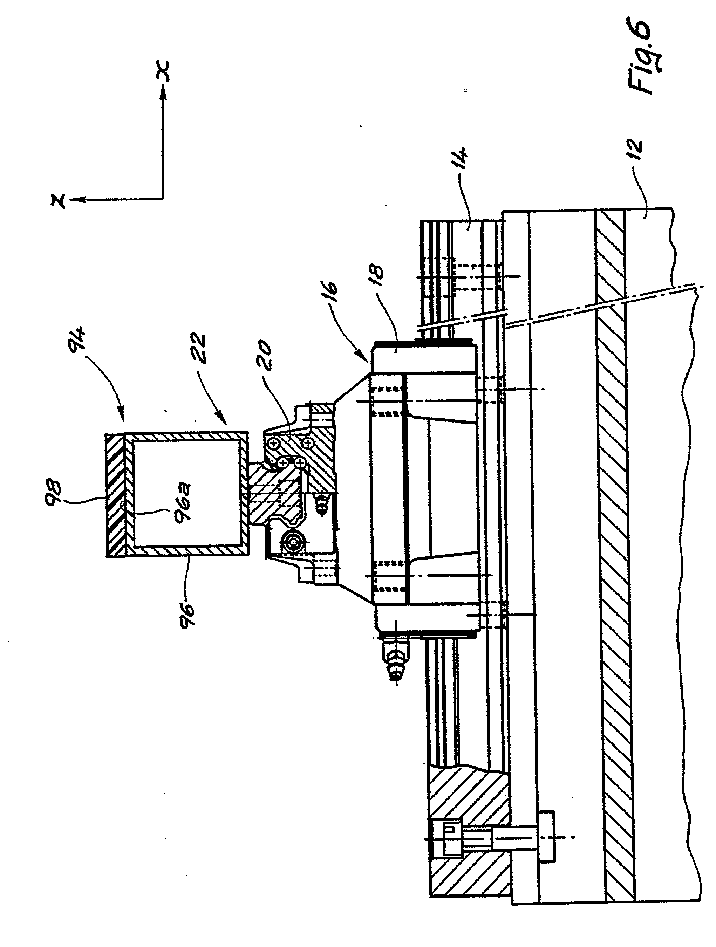

Une autre solution est représentée à la figure 6. Dans ce cas la poutre 22 comporte un profilé 94 formé d'un tube 96, de section carrée et en alliage d'aluminium, ainsi qu'une bande de matériau composite 98, accolée à la face supérieure 96a du tube 96. Ce matériau composite peut avantageusement comporter des fibres de Kevlar (marque déposée de la maison Dupont de Nemours, USA) et de carbone. Des matériaux de ce type permettent d'atteindre un coefficient de dilatation thermique égale à $-2.10^{-6}$ par degré Celsius. L'épaisseur de la bande 98 est choisie de manière que la force de cisaillement engendrée par la dilatation thermique de la bande 98 à son interface avec le tube 96 soit égale à celle engendrée par le rail 24 à son interface avec ce même tube 96.

Dans une troisième variante, non représentée au dessin, le profilé comporte un tube en alliage d'aluminium revêtu de matériau composite. Le matériau est choisi et réparti de manière que le profilé se dilate linéairement avec un coefficient de dilatation sensiblement égale à celui du matériau formant le rail, en l'occurence l'acier.

Dans une quatrième variante, non représentée au dessin, une sonde thermique est reliée à l'ordinateur de commande du robot. Cet ordinateur comporte en mémoire des coefficients de correction des coordonnées de l'axe Z, mais aussi éventuellement des axes X et Y, en fonction de la température mesurée.

La correction peut être effectuée en calculant la coordonnée Z' que doit prendre le robot pour que la tête se trouve effectivement à la coordonnée Z, à partir d'une équation du type:

$Z' = Z + a(t-t0)$

dans laquelle a est un coefficient de correction linéaire, t la température mesurée et t0 la température d'étalonnage.

Il va de soi que des équations similaires peuvent être utilisées pour les axes X et Y.

Des équations quadratiques ou de troisième ordre pourraient permettre une adaptation plus fine.

Les robots tels qu'ils viennent d'être définis ci-dessus offrent une souplesse d'adaptation très grande car ils peuvent être fixés sur pratiquement n'importe quelle surface plane, une même surface pouvant d'ailleurs porter plusieurs robots, orientés de manière quelconque l'un par rapport à l'autre.

Il est aussi possible d'associer aux rails 14, 24 et 30 des systèmes de mesure optique, pour garantir une précision encore meilleure que celle qu'offre les servo-moteurs habituellement utilisés pour ce type de robot.

## Revendications

1. Robot cartésien comportant un support (10, 12), trois rails de guidage (14, 24, 30) en acier usiné définissant deux axes horizontaux orthogonaux (X, Y) et un axe vertical (Z), trois patins (18, 20, 32) chacun coopérant de manière coulissante avec l'un des rails, et une tête 34 destinée à porter un outil, dans lequel:
- le premier rail 14 est monté rigidement sur le support et définit un premier (X) des axes horizontaux;
- le deuxième rail 24 définit le second des axes horizontaux (Y),
- une extrémité du deuxième rail (24) porte le troisième patin (28),
- le troisième rail (30) est monté coulissant sur le troisième patin (28), caractérisé en ce que
- le patin (18) monté coulissant sur le premier rail (14) est solidaire du patin (20) coopérant avec le deuxième rail (24), formant ensemble un chariot (22), que le deuxième rail (24) comporte l'une au moins de sa pluralité de face libre de tout contact avec ledit patin, et solidaire d'un profilé de rigidification 26, 84, 96), fixé sur au moins une partie de sa longueur, en appui contre sa face libre.

2. Robot cartésien suivant la revendication 1, caractérisé en ce que ledit profilé de rigidification (26, 29) est un tube de section carrée ou rectangulaire.

3. Robot cartésien, selon la revendication 1, caractérisé en ce que le profilé de rigidification (84) comporte une âme (92), contre laquelle est rapportée le deuxième rail (24), et au moins deux branches (88, 90) solidaires des rives de l'âme (92) et s'étendant de part et d'autre du deuxième rail (24), le profilé étant dimensionné de manière que sa fibre neutre coïncide avec la fibre neutre de ce rail.

4. Robot cartésien selon la revendication 1, caractérisé en ce que ledit profilé (94) comporte un tube (96) présentant deux faces opposées, dont l'une est attenante au rail (24) d'axe Y et dont l'autre porte une bande (98) de matériau composite, en ce que le tube (96) est en un matériau présentant un coefficient de dilatation supérieur au matériau du rail, et en ce que le matériau composite présente un coefficient de dilatation inférieur à celui du tube, l'épaisseur de la bande (98) étant choisie de manière que les forces engendrées respectivement par la dilatation thermique de la bande et du rail soient égales.

5. Robot cartésien selon la revendication 1, caractérisé en ce que ledit profilé 26 comporte un tube en un premier matériau présentant un premier coefficient de dilatation, supérieur à celui du matériau constituant le deuxième rail (24), et revêtu d'un deuxième matériau présentant un deuxième coefficient de dilatation inférieur à celui du matériau formant le deuxième rail, les matériaux étant choisis et répartis de manière que le profilé se dilate linéairement et avec un coefficient voisin de celui du matériau formant le deuxième rail.

6. Robot cartésien selon l'une des revendications 1 à 5, caractérisé en ce que ledit troisième rail (30) forme une poutre avec un profilé de rigidification (32) qui s'étend sur au moins une partie de sa longueur.

## Patentansprüche

1. Kartesischer Roboter, umfassend einen Support (10, 12), drei Führungsschienen (14, 24, 30) aus bearbeitetem Stahl, die zwei horizontale zu einander senkrechte Achsen (X, Y) und eine vertikale Achse (Z) definieren, drei Gleitstücke (18, 20, 32), von denen jedes gleitbeweglich mit einer der Schienen zusammenwirkt, und einen zum Tragen eines Werkzeugs bestimmten Kopf (34), wobei
– die erste Schiene (14) starr auf dem Support befestigt ist und eine erste (X) der horizontalen Achsen definiert;
– die zweite Schiene (24) die zweite horizontale Achse (Y) definiert;
– ein Ende der zweiten Schiene (24) das dritte Gleitstück (28) trägt;
– die dritte Schiene (30) gleitbeweglich auf dem dritten Gleitstück (28) montiert ist, dadurch gekennzeichnet, daß das Gleitstück (18), das gleitbeweglich auf der ersten Schiene (14) angeordnet ist, verbunden ist mit dem Gleitstück (20), das mit der zweiten Schiene (24) zusammenwirkt unter Bildung einer Schlittenbaugruppe (22), daß die zweite Schiene (24) mindestens eine ihrer Mehrzahl von Seiten frei von jeglichem Kontakt mit dem genannten Gleitstück aufweist und verbunden ist mit einem Versteifungsprofil (26, 84, 96), befestigt auf mindestens einem Abschnitt ihrer Länge in Anlage an ihrer freien Seite.

2. Kartesischer Roboter nach Anspruch 1, dadurch gekennzeichnet, daß das Versteifungsprofil (26, 29) ein Rohr mit quadratischem oder rechteckigem Querschnitt ist.

3. Kartesischer Roboter nach Anspruch 1, dadurch gekennzeichnet, daß das Versteifungsprofil (84) einen Innensteg (92) umfaßt, gegen den die zweite Schiene (24) angesetzt ist und mindestens zwei mit Kanten des Innenstegs (92) verbundene Arme (88, 90) umfaßt, die sich beidseits der zweiten Schiene (22) erstrecken, wobei das Profil derart dimensioniert ist, daß seine neutrale Faser mit der neutralen Faser dieser Schiene zusammenfällt.

4. Kartesischer Roboter nach Anspruch 1, dadurch gekennzeichnet, daß das Profil (94) ein Rohr (96) mit zwei einander gegenüberliegenden Seiten aufweist, deren eine an der Schiene (24) der Y-Achse anliegt und deren andere ein Band (98) aus Kompositmaterial umfaßt und daß das Rohr (96) aus einem Material besteht mit einem Dilatationskoeffizienten, der größer ist als der des Schienenmaterials und daß das Kompositmaterial einen Dilatationskoeffizienten aufweist, der kleiner ist als derjenige des Rohres, wobei die Dicke des Bandes (98) derart gewählt ist, daß die durch die thermische Dilatation des Bandes bzw. der Schiene erzeugten Kräfte gleich sind.

5. Kartesischer Roboter nach Anspruch 1, dadurch gekennzeichnet, daß das Profil (26) ein Rohr aus einem ersten Material umfaßt mit einem ersten Dilatationskoeffizienten, der größer ist als derjenige des Materials, aus dem die zweite Schiene (24) besteht und beschichtet ist mit einem zweiten Material mit einem zweiten Dilatationskoeffizienten, der kleiner ist als derjenige des die zweite Schiene bildenden Materials, wobei die Materialien ausgewählt und verteilt sind derart, daß das Profil sich linear ausdehnt und mit einem Koeffizienten nahe demjenigen des die zweite Schiene bildenden Materials.

6. Kartesischer Roboter nach einem der Ansprüche 1 bis 5, dadurch gekennzeichnet, daß die dritte Schiene (30) einen Träger mit einem Versteifungsprofil (32) bildet, das sich auf mindestens einem Abschnitt ihrer Länge erstreckt.

**Claims**

1. A Cartesian coordinate-type robot comprising a support (10, 12) three guide rails (14, 24, 30) of machined steel defining two orthogonal horizontal axes (X, Y) and a vertical axis (Z), three runners (18, 20, 32) each cooperating in a sliding manner with one of the rails, and a head (34) intended to carry a tool, in which:
— the first rail (14) is rigidly mounted on the support and defines a first one (X) of the horizontal axes;
— the second rail (24) defines the second of the horizontal axes (Y),
— one end of the second rail (24) bears the third runner (28),
— the third rail (30) is slidingly mounted on the third runner (28), characterized in that the runner (18) slidingly mounted on the first rail (14) is fixed to the runner (20) cooperating with the second rail (24) together therewith forming a carriage (22), that the second rail (24) has at least one of its plurality of faces free of all contact with said runner and secured to a stiffening section (26, 84, 96) fixed over at least a portion of its length bearing against its free face.

2. A Cartesian coordinate-type robot according to claim 1 characterized in that said stiffening section (26, 29) is a tube of square or rectangular cross section.

3. A Cartesian coordinate-type robot according to claim 1 characterized in that the stiffening section (84) comprises a web (92) to which the second rail (24) is joined, and at least two branches (88, 90) fixed to the edges of the web (92) and extending on either side of the second rail (24), the section being dimensioned in a manner such that its neutral axis coincides with the neutral axis of such rail.

4. A Cartesian coordinate-type robot according to claim 1, characterized in that said section (94) comprises a tube (96) exhibiting two opposed faces, one of which is contiguous to the Y axis rail (24) and the other of which bears a band (98) of composite material, in that the tube (96) is of a material exhibiting a coefficient of expansion greater than the material of the rail, and in that the composite material exhibits a coefficient of expansion less than that of the tube, the thickness of the band (98) being chosen in a manner such that the forces generated respectively by the thermal expansion of the band and of the rail are equal.

5. A Cartesian coordinate-type robot according to claim 1 characterized in that said section (26) comprises a tube of a first material exhibiting a first coefficient of expansion, greater than that of the material constituting the second rail (24) and coated with a second material exhibiting a second coefficient of expansion less than that of the material forming the second rail, the materials being chosen and distributed in a manner such that the section expands linearly and with a coefficient neighbouring that of the material forming the second rail.

6. A Cartesian coordinate-type robot according to any of claims 1 to 5 characterized in that said third rail (30) forms a beam with a stiffening section (32) which extends over at least a portion of its length.

Fig.1

Fig.2

Fig. 3

Fig.4

Fig.5

Fig.6